Europäisches Patentamt

European Patent Office

Office européen des brevets

(19)

(11) Veröffentlichungsnummer: **0 480 141 A1**

# (12) EUROPÄISCHE PATENTANMELDUNG

(21) Anmeldenummer: **91113417.9**

(51) Int. Cl.5: **C23C 22/56**, C09J 5/02

(22) Anmeldetag: **09.08.91**

(30) Priorität: **11.10.90 DE 4032214**

(43) Veröffentlichungstag der Anmeldung:
**15.04.92 Patentblatt 92/16**

(84) Benannte Vertragsstaaten:
**FR GB IT NL**

(71) Anmelder: **DEUTSCHE AIRBUS GMBH
Kreetslag
W-2000 Hamburg(DE)**

(72) Erfinder: **Kock, Erich
Gavelottestrasse 61
W-2800 Bremen 1(DE)**
Erfinder: **Matz, Christoph, Dr.
Ramakerweg 6
W-2900 Oldenburg(DE)**
Erfinder: **Muss, Volker
Bozener Strasse 7
W-2800 Bremen(DE)**

(54) **Verfahren zum chemischen Behandeln von Werkstücken aus Aluminium.**

(57) Die Erfindung bezieht sich auf ein Verfahren zum chemischen Behandeln von Werkstücken aus Aluminium bzw. Aluminiumlegierungen. Die Werkstücke werden in ein Kombinationsbad einer anorganischen Mineralsäure und eines Oxidationsmittels für ein bestimmtes Zeitintervall getaucht, damit auf den Oberflächen der Werkstücke eine Oxidschicht als Voraussetzung für eine gute Adhäsionsstabilität von Klebeverbindungen entsteht.

EP 0 480 141 A1

Die Erfindung bezieht sich auf ein Verfahren zum chemischen Behandeln von Werkstücken aus Aluminium bzw. Aluminiumlegierungen zur Erzeugung von Oberflächen mit einer für Klebeverbindungen erforderlichen Oxidschicht.

Bei der Herstellung von Strukturbauteilen durch Verkleben von Einzelteilen aus Aluminium bzw. Aluminiumlegierungen ist es notwendig die Oberflächen dieser Bauteile einer Vorbehandlung zu unterziehen. Bei dieser Vorbehandlung der Aluminiumbauteile werden die Oberflächen mit einer Oxidschicht versehen, welche eine notwendige Voraussetzung für die gewünschte Adhäsionsstabilität der Klebeverbindung ist. Bisher war es üblich Oxidfilme auf Aluminiumbauteilen mit Hilfe des sog. Picklingverfahrens zu erzeugen, welches auf der Basis der Chromsäure arbeitet und gute Vorbehandlungsschichten mit starken Adhäsionseigenschaften liefert.

Das Picklingverfahren wird aber wegen der Umweltgefahren, und zwar wegen des erforderlichen Chromats, negativ beurteilt, und außerdem ist für dieses Verfahren Energie zur Baderwärmung notwendig.

Der Erfindung liegt daher die Aufgabe zugrunde ein Verfahren zum chemischen Behandeln von Werkstücken aus Aluminium bzw. Aluminiumlegierungen zu schaffen, das den Forderungen nach geringer Umweltbelastung Rechnung trägt und ohne zusätzliche Energie in der Lage ist hinreichende Oxidshichten auf den zu behandelden Aluminiumbauteilen zu erzeugen. Diese Aufgabe ist gemäß der Erfindung dadurch gelöst, daß die Werkstücke in ein Kombinationsbad einer anorganischen Mineralsäure und eines Oxidationsmittels für ein bestimmtes Zeitintervall getaucht werden.

Das erfindungsgemäße Verfahren hat den Vorteil mit billigeren Chemikalien zu arbeiten und außerdem benötigt es keine Energie, da das Kombinationsbad am besten bei Raumtemperatur arbeitet. Als Mineralsäuren können Schwefelsäure oder Phosphorsäure benutzt werden, während für das Oxidationsmittel Peroxodisulfate, z.B. das Ammoniumsalz, sowie Perborate, z.B. das Natriumsalz verwendet werden können. Es ist zweckmäßig für die Behandlungsdauer einen Zeitraum im Bereich von 30 Minuten zu wählen und das Kombinationsbad mit einer Säurekonzentration von 3m (mol) und 0,3m (mol) für das Oxidationsmittel zu betreiben.

Das erfindungsgemäße Behandeln von Werkstücken aus Aluminium oder Aluminiumlegierungen führt zu optimalen Ergebnissen, da die Oxidschichten auf den Aluminiumbauteilen eine ausgezeichnete Adhäsionsstabilität für die Klebeverbindungen sichern. Das Verfahren ist gegenüber den bekannten Verfahren mit erhöhter Zuverlässigkeit durchführbar und es bereitet auch beim Entsorgen, und zwar wegen des chromatfreien Bades , keine Probleme.

Das erfindungsgemäße Verfahren Kann auch mit Wasserstoffsuperoxid ($H_2O_2$) als Oxidationsmittel betrieben werden, aber dieses Oxidationsmittel hat gegenüber den zuvor angegebenen Mitteln ein geringeres Redoxpotential, bzw. es hat mit dem Wasserstoffsuperoxid in saurer Umgebung eine für diese Lösung viel zu hohe Zersetzungsarate und würde im Einsatz einen extremen Kontrollaufwand erfordern. Die erfindungsgemäße Vorbehandlung kann auch mit einer Kombinationspaste oder durch Aufsprühen der Kombinationslösung auf ein zu behandelndes Werkstück erfolgen.

## Patentansprüche

1. Verfahren zum chemischen Behandeln von Werkstücken aus Aluminium bzw. Aluminiumlegierungern zur Erzeugung von Oberflächen mit einer für Klebeverbindungen erforderlichen Oxidschicht, dadurch gekennzeichnet, daß die Werkstücke in ein Kombinationsbad einer anorganischen Mineralsäure und eines Oxidationsmittels für ein bestimmtes Zeitintervall getaucht werden.

2. Verfahren nach Anspruch 1, dadurch gekennzeichnet, daß für die anorganische Mineralsäure Schwefelsäure ($H_2SO_4$) verwendet wird.

3. Verfahren nach Anspruch 1, dadurch gekennzeichnet, daß für die anorganische Mineralsäure Phosphorsäure verwendet wird.

4. Verfahren nach einem der Ansprüche 1 bis 3, dadurch gekennzeichnet, daß für das Oxidationsmittel Peroxodisulfat, insbesondere Ammoniumsalz $\langle(NH_4)_2S_2O_8\rangle$ benutzt wird.

5. Verfahren nach einem der Ansprüche 1 bis 3 dadurch gekennzeichnet, daß für das Oxidationsmittel Perborat, insbesondere das Natriumsalz $\langle NaBO_2.H_2O_2.3H_2O\rangle$ benutzt wird.

6. Verfahren nach einem der Ansprüche 1 bis 5, dadurch gekennzeichnet, daß das Bad eine Säurekonzentration von 3m (mol) und 0,3m (mol) für das Oxidationsmittel besitzt.

7. Verfahren nach einem der Ansprüche 1 bis 6, dadurch gekennzeichnet, daß die Behandlungstemperatur des Kombinationsbades Raumtemperatur ist.

8. Verfahren nach einem der vorhergehenden Ansprüche, dadurch gekennzeichnet, daß für die Behandlungsdauer ein Zeitraum im Bereich von 30 Minuten gewählt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CN-A-1 045 817 (ALCAN INTERNATIONAL LIMITED)Oktober 1990 <br> * Ansprüche 1,2,6,9,12 * * | 1,2 | C 23 C 22/56 <br> C 09 J 5/02 |
| Y | (* Ansprüche 1,2,6,9,12 * & EP-A-0 396 238) <br> – – – | 3-5 | |
| Y | US-A-4 373 050 (ANCHEM PRODUCTS) <br> * Ansprüche 1,3,4 * * <br><br> – – – | 3,5 | |
| Y | US-A-1 502 910 (FRIEDMUND LOTHES) <br> * Ansprüche 1,3-6 * * <br> – – – | 4 | |
| A | CH-A-540 350 (HIKARU ITO) <br> * Ansprüche; Beispiel 1 * * <br> – – – | 1,7,8 | |
| A | FR-A-1 567 752 (SOCIETE CONTINENTALE PARKER) <br> – – – – – | | |

| | RECHERCHIERTE SACHGEBIETE (Int. Cl.5) |
|---|---|
| | C 23 C <br> C 09 J |

Der vorliegende Recherchenbericht wurde für alle Patentansprüche erstellt

| Recherchenort | Abschlußdatum der Recherche | Prüfer |
|---|---|---|
| Den Haag | 23 Januar 92 | LANDAIS A.M-R. |